# FASCICULE DE BREVET EUROPEEN

(11) **EP 3 408 179 B1**
(45) Date de publication et mention de la délivrance du brevet: **16.09.2020**
(21) Numéro de dépôt: 17701859.5
(22) Date de dépôt: 26.01.2017
(51) Int. Cl.: B64G 1/58, F02K 9/97, C08L 61/14, C08G 8/30, C08G 8/28, C08G 8/36

(54) **RÉSINE DURCISSABLE SUBSTITUT AUX RÉSINES PHÉNOLIQUES ET SES APPLICATIONS**
HÄRTBARES HARZ ALS ERSATZ FÜR PHENOLHARZE UND ANWENDUNGEN DAVON
CURABLE RESIN AS A SUBSTITUTE FOR PHENOLIC RESINS AND THE APPLICATIONS THEREOF

(30) Priorité: 29.01.2016 FR 1650755
(43) Date de publication de la demande: 05.12.2018
(73) Titulaire: ArianeGroup SAS, 75015 Paris (FR); Université De Reims Champagne-Ardenne, 51097 Reims Cedex (FR); Centre National de la Recherche Scientifique, 75794 Paris Cedex 16 (FR)
(72) Inventeur: RIVIERES, Bastien, 81640 Le Segur (FR); DEFOORT, Brigitte, 33160 Saint Medard En Jalles (FR); LESAMBER, Cécile, 33300 Bordeaux (FR); COQUERET, Xavier, 51100 Reims (FR)
(74) Mandataire: Brevalex
(86) Numéro de dépôt international: PCT/EP2017/051619
(87) Numéro de publication internationale: WO 2017/129661

(56) Documents cités:
- WO-A1-2011/131691
- RAMÓN CERVERA-PROCAS ET AL: "A Polymer Network Prepared by the Thiol-yne Photocrosslinking of a Liquid Crystalline Dendrimer", MACROMOLECULAR RAPID COMMUNICATIONS, vol. 34, no. 6, 25 mars 2013 (2013-03-25), pages 498-503, XP055319209, ISSN: 1022-1336, DOI: 10.1002/marc.201200730

## Description

### DOMAINE TECHNIQUE

L'invention se rapporte au domaine des résines durcissables et des matériaux obtenus à partir de ces résines.

Plus spécifiquement, elle se rapporte à une résine durcissable qui représente un excellent substitut aux résines phénoliques et qui est donc susceptible de remplacer les résines phénoliques dans toutes les applications dans lesquelles celles-ci sont utilisées et, notamment mais pas seulement, dans la fabrication de matériaux composites dits « ablatifs » tels que ceux qui entrent dans la constitution :
- des boucliers thermiques qui protègent les véhicules envoyés dans l'espace (navettes, satellites artificiels, fusées, sondes, etc) de l'échauffement cinétique qu'ils subissent lors de leur entrée à grande vitesse dans l'atmosphère d'une planète du système solaire (Terre, Mars, Vénus, Jupiter, etc) ou d'un satellite d'une planète (lune par exemple) ; ou
- des parois des tuyères des moteurs à propulsion, par exemple, pour lanceurs spatiaux.

L'invention se rapporte également à un matériau qui est obtenu par durcissement de cette résine durcissable et, en particulier, à un matériau composite ablatif.

L'invention se rapporte en outre à l'utilisation de ladite résine durcissable pour la fabrication d'un matériau composite ablatif et, plus spécifiquement, d'un matériau composite ablatif de protection thermique, notamment pour l'aérospatiale.

### ÉTAT DE LA TECHNIQUE ANTÉRIEURE

Un matériau ablatif est défini comme un matériau qui est capable de subir une ablation, c'est-à-dire une perte de substance par décomposition chimique, changement d'état ou érosion mécanique sous l'effet d'un flux de matière ou de rayonnement (Journal Officiel de la République Française du 22 septembre 2000).

Typiquement, dans le cas d'un matériau ablatif du type de ceux évoqués ci-avant, la couche externe du matériau ablatif qui est directement en contact avec l'environnement, par exemple l'atmosphère lors d'une phase de rentrée dans l'atmosphère, subit sous l'effet de la chaleur une transformation chimique ainsi qu'une récession qui est liée à cette transformation mais aussi à d'autres phénomènes comme des cisaillements mécaniques ou aérodynamiques.

Cette couche externe rayonne vers l'extérieur et sa transformation chimique consomme de l'énergie, les deux effets contribuant à une moindre transmission de la chaleur vers les couches internes du matériau et, donc, à une isolation thermique de la structure sous-jacente.

Un bon matériau ablatif doit être tel que :
- sa transformation chimique sous l'effet de la chaleur soit (très) endothermique;
- sa conductivité thermique soit faible, en régime stationnaire et/ou en transitoire (diffusivité dans ce cas) ; et
- sa transformation chimique ne s'accompagne pas d'une récession trop rapide.

Ce dernier point est acquis quand la transformation chimique du matériau ablatif s'accompagne de la formation d'une « croûte » qui, d'une part, limite, voire élimine, la récession d'origine purement chimique et, d'autre part, est capable de résister à la récession d'origine mécanique liée aux cisaillements.

Pour des applications de rentrée atmosphérique ou de propulsion, les « croûtes » attendues sont à base de carbone ou de silice et proviennent de la pyrolyse de polymères, respectivement organiques ou silicones.

On considère que les polymères organiques les mieux adaptés à la fabrication de matériaux ablatifs doivent être capables de donner une grande quantité de carbone, ce que l'on exprime par le fait que leur « taux de coke » doit être élevé. Ce taux de coke est défini comme la masse du résidu qui est obtenu quand on décompose un échantillon d'un polymère organique par pyrolyse, à une température supérieure ou égale à 900°C et sous gaz neutre (azote ou argon), rapportée à la masse initiale de cet échantillon. Le taux de coke est supérieur à 50% et peut même dépasser 60% pour les meilleurs polymères organiques à potentiel ablatif.

C'est le cas du taux de coke que présentent certaines résines phénoliques qui sont, à ce jour, les résines durcissables les plus fréquemment utilisées pour la fabrication de matériaux ablatifs. Le fort taux de coke de ces résines est également mis à profit pour l'élaboration de certains matériaux composites de protection thermiques radiatifs, à savoir les composites à matrice céramique.

Un exemple de matériau ablatif comprenant une résine phénolique est décrit dans la demande internationale PCT WO 2011/131691.

Les résines phénoliques sont obtenues par polycondensation de monomères issus de la pétrochimie : le phénol et le formaldéhyde, ce qui leur vaut d'être aussi appelées résines phénol-formaldéhydes ou résines formophénoliques.

L'utilisation très répandue des résines phénoliques dans l'industrie des matières plastiques s'explique par leur résistance thermique (elles ne commencent à se décomposer qu'aux environs de 300°C), leur résistance électrique, leur résistance au feu et par la faible émission de fumée qu'elles génèrent lorsqu'elles sont exposées à des flammes. Dès 1908, les résines phénoliques ont été associées à divers matériaux de renfort pour réaliser des pièces pour l'électronique. En aéronautique, elles peuvent faire office de liants au sein de matériaux composites renforcés de fibres de verre ou d'aramide pour les pièces d'aménagement intérieur (planchers d'avions par exemple), les radômes et les voilures. De larges volumes de résines phénoliques sont, par ailleurs, employés comme vernis ou pour la fabrication de panneaux de bois (agglomérés, contreplaqués, panneaux à copeaux orientés, etc).

Toutefois, il s'avère que le phénol est toxique et très corrosif pour les tissus vivants non protégés, tandis que le formaldéhyde serait cancérigène (il serait à l'origine de cancers nasopharyngés) et les vapeurs qu'il émet sont extrêmement Irritantes pour les yeux et les voies respiratoires. Ces deux composés sont donc sous la surveillance du Règlement (CE) n° 1907/2006 du Parlement Européen et du Conseil dit « REACh », qui a pour principal objectif de mieux protéger la santé humaine et l'environnement contre les risques que peuvent présenter les produits chimiques, et les matériaux obtenus à partir de phénol et de formaldéhyde sont, par conséquent, menacés d'obsolescence.

Compte-tenu de la place qu'occupent actuellement les résines phénoliques dans l'industrie des matériaux plastiques et des inconvénients que leurs précurseurs présentent en termes de toxicité, il serait souhaitable de disposer de nouvelles résines durcissables qui, tout en présentant des propriétés similaires à celles des résines phénoliques, puissent être obtenues à partir de précurseurs non toxiques ou, à tout le moins, moins toxiques que le phénol et le formaldéhyde.

Il s'avère, de plus, que la polycondensation du phénol et du formaldéhyde n'est jamais achevée, d'où la présence de composés volatils et de molécules d'eau qui sont très difficiles à éliminer si un cycle thermique bien défini n'est pas suivi au cours de cette polycondensation et qui peuvent conduire à des matériaux poreux dans leur état natif ainsi qu'à des dégazages durant la vie des matériaux fabriqués à partir de résines phénoliques. Or, ces dégazages peuvent avoir des conséquences très néfastes dans certaines applications comme, par exemple, les applications aérospatiales.

Les Inventeurs se sont donc fixé pour but général de développer des résines durcissables propres à remplacer les résines phénoliques dans toutes leurs applications et, en particulier, dans leur utilisation en tant que matériaux ablatifs, et dont la préparation soit exempte des inconvénients présentés par celle des résines phénoliques, tant en termes de toxicité des précurseurs utilisés qu'en termes de porosité et de dégazage des matériaux obtenus à partir de ces résines.

Dans ce contexte, ils se sont plus spécifiquement fixés pour but que ces résines :
(1) aient des propriétés proches de celles d'une résine phénolique commerciale couramment utilisée dans l'aérospatiale pour l'élaboration de matériaux composites ablatifs, l'Ablaphene RA 101, à savoir : un taux de coke supérieur à 50%, une température de transition vitreuse supérieure à 250°C (l'idéal étant qu'elle soit la plus élevée possible) et une viscosité suffisamment faible à des températures inférieures à 80°C (typiquement inférieure à 2 Pa.s) pour permettre leur utilisation dans des procédés d'imprégnation de fibres de renfort sans avoir à utiliser de solvant organique ; et
(2) puissent être obtenues à partir de précurseurs qui, outre de ne pas être toxiques ou que très faiblement toxiques, soient issus de la biomasse de sorte à s'affranchir de la volatilité des prix des matières premières fossiles, anticiper leur raréfaction, réduire la libération de gaz à effet de serre d'origine fossile, préserver l'environnement et conférer aux résines et aux matériaux obtenus à partir de celle-ci un caractère renouvelable.

### EXPOSÉ DE L'INVENTION

Ces buts et d'autres encore sont atteints par l'invention qui propose, en premier lieu, une résine durcissable, qui est caractérisée en ce qu'elle comprend :
(1) au moins un prépolymère qui résulte de la prépolymérisation d'un composé A comprenant un ou plusieurs cycles aromatiques ou hétéroaromatiques, un premier groupe -O-CH₂-C≡CH et au moins un deuxième groupe choisi parmi les groupes -O-CH₂-C≡CH et -CH₂-CH=CH₂, ces groupes étant portés par le ou les cycles aromatiques ou hétéroaromatiques ; et
(2) un composé B comprenant au moins deux groupes thiols (-SH).

Dans ce qui précède et ce qui suit, le terme « *prépolymère* » est pris dans son acceptation habituelle, à savoir qu'il désigne un oligomère ou un polymère présentant au moins deux groupes réactifs qui lui permettent de participer à une polymérisation ultérieure, et ce, que ce soit sous l'effet de la chaleur, de la lumière (lumière visible, ultraviolette ou infrarouge), d'un rayonnement ionisant (faisceau d'électrons, rayonnement β ou γ, rayons X, ...) ou de tout autre moyen.

Dans le cadre de l'invention, les groupes réactifs du prépolymère sont représentés par les groupes -O-CH₂-C≡CH et/ou -CH₂-CH=CH₂ libres que comprend ce prépolymère, c'est-à-dire parmi ceux des groupes -O-CH₂-C≡CH et/ou -CH₂-CH=CH₂ des molécules du composé A qui n'ont pas participé à la polymérisation de ce composé.

Dans ce qui précède et ce qui suit, le terme « *cycle aromatique* » est également pris dans son acceptation habituelle, à savoir qu'il désigne un monocycle ou un polycycle qui satisfait à la règle de Hückel et qui présente donc un nombre d'électrons π délocalisés égal à 4*n* + 2, tandis que l'on entend par « *cycle hétéroaromatique* », un cycle aromatique tel qu'il vient d'être défini, mais dont au moins un atome de carbone est remplacé par un atome d'azote, d'oxygène ou de soufre.

Ainsi, le ou les cycles aromatiques peuvent notamment être des cycles benzéniques ou naphtaléniques tandis que le ou les cycles hétéroaromatiques peuvent notamment être des cycles furaniques, pyrroliques, thiophéniques, pyridiniques, quinoléiniques, isoquinoléiniques, pyraziniques, pyrimidiniques, etc.

Conformément à l'invention, le composé A est le produit d'une propargylation d'un composé A' qui comprend un ou plusieurs cycles aromatiques ou hétéroaromatiques, un premier groupe hydroxyle (-OH) ou carboxyle (-COOH) et au moins un deuxième groupe choisi parmi les groupes hydroxyle, carboxyle et -CH₂-CH=CH₂, ces groupes étant portés par le ou les cycles aromatiques ou hétéroaromatiques.

Cette propargylation, qui consiste à substituer l'atome d'hydrogène du ou des groupes hydroxyles et/ou carboxyles que comprend le composé A' par un groupe -CH₂-C≡CH, peut notamment être réalisée comme décrit par M. C. Joshi et al. dans Bioorg. Med. Chem. Lett. 2007, 17(11), 3226-3230 (référence **[1]**), c'est-à-dire en faisant réagir le composé A' avec un halogénure de propargyle, typiquement du bromure de propargyle, en milieu fortement basique tel qu'un milieu comprenant du carbonate de potassium dans du *N,N*-diméthylformamide, de l'hydrure de sodium dans du tétrahydrofurane, ou une solution aqueuse d'hydroxyde de sodium.

Typiquement, le composé A' et, partant, le composé A qui en dérive sont tels que :
- soit ils ne comprennent qu'un seul cycle aromatique ou hétéroaromatique, auquel cas les deux groupes que doivent comprendre à minima les composés A' et A sont portés par le même cycle aromatique hétéroaromatique ;
- soit ils comprennent deux ou plus de deux cycles aromatiques ou hétéroaromatiques, auquel cas les deux groupes que doivent porter à minima les composés A' et A peuvent être portés par le même cycle aromatique ou hétéroaromatique ou par deux cycles aromatiques ou hétéroaromatiques différents.

Dans ce qui précède et ce qui suit, on considère qu'un groupe est porté par un cycle aromatique ou hétéroaromatique dès lors que ce groupe est rattaché à un atome de ce cycle, et ce, que ce soit directement, c'est-à-dire par une liaison covalente, ou indirectement, c'est-à-dire par l'intermédiaire d'un groupe espaceur acyclique comme, par exemple, un groupe hydrocarboné divalent, saturé ou insaturé, en C1 à C4.

Toutefois, dans le cadre de l'invention, on préfère que les groupes portés par le ou les cycles aromatiques ou hétéroaromatiques soient rattachés à un atome de ce ou ces cycles par une liaison covalente ou par un groupe méthylène divalent (-CH₂-).

Par ailleurs, lorsque le composé A' et, partant, le composé A qui en dérive comprennent deux ou plus de deux cycles aromatiques, alors on préfère que ces cycles soient reliés les uns aux autres soit directement, c'est-à-dire par une liaison covalente, soit par un groupe acyclique divalent ne comprenant pas plus de 4 atomes de carbone.

Ainsi, le composé A' peut notamment être choisi parmi :
- les monophénols allylés, c'est-à-dire les composés qui comprennent un groupe phénolique et un groupe -CH₂-CH=CH₂ comme, par exemple, le 2-allylphénol, le chavicol (ou 4-allylphénol), l'eugénol (ou 2-méthoxy-4-(2-propènyl)phénol), le 4-allyl-2,6-diméthylphénol, etc ;
- les polyphénols, c'est-à-dire les composés qui comprennent au moins deux groupes phénoliques comme, par exemple, le résorcinol (ou 1,3-benzènediol) et ses deux isomères : l'hydroquinone (ou benzène-1,4-diol) et le pyrocathécol (ou benzène-1,2-diol), le phloroglucinol (ou benzène-1,3,5-triol) et ses deux isomères : le pyrogallol (ou benzène-1,2,3-triol) et l'hydroxyquinol (ou benzène-1,2,4-triol), le resvératrol (ou 5-[2-(4-hydroxyphényl)éthényl]-1,3-benzènediol), les dimères de monophénols allylés tels que les dimères d'eugénol (2-méthoxy-4-(2-propènyl)phénol), etc ;
- les acides phénoliques, aussi appelés acides-phénols, qui comprennent au moins un groupe phénolique et au moins un groupe acide carboxylique comme, par exemple, l'acide parahydroxybenzoïque (ou acide 4-hydroxybenzoïque), l'acide gallique (ou acide 3,4,5-trihydroxybenzoïque) et ses cinq isomères dont l'acide phloroglucinique (ou acide 2,4,6-trihydroxybenzoïque) et l'acide pyrrogalolcarboxylique (ou acide 2,3,4-trihydroxybenzoïque), l'acide vanillique (ou acide 4-hydroxy-3-méthoxybenzoïque), l'acide salicylique (ou acide 2-hydroxybenzoïque) et ses deux isomères : l'acide 3-hydroxybenzoïque et l'acide 4-hydroxybenzoïque, l'acide protocatéchique (ou acide 3,4-dihydroxybenzoïque) et ses cinq isomères dont l'acide gentisique (ou acide 2,5-dihydroxybenzoïque) et les acides α-, β- et γ-résorcyliques, etc; et
- les acides polycarboxyliques à un ou plusieurs cycles aromatiques ou hétéroaromatiques comme, par exemple, l'acide phtalique (ou acide benzène-1,2-dicarboxylique), l'acide isophtalique (ou acide benzène-1,3-dicarboxylique), l'acide téréphtalique (ou acide benzène-1,4-dicarboxylique), l'acide trimillétique (ou acide 1,2,3-benzène tricarboxylique), l'acide trimésique (ou acide 1,3,5-benzène tricarboxylique), l'acide 2,6-naphtalènedicarboxylique, l'acide 1,5-naphtalènedicarboxylique, l'acide 4,4'-carbonyldiphtalique, l'acide déhydromucique (ou acide 2,5-furandicarboxylique), etc.

Conformément à l'invention, le composé A' peut aussi bien être issu de la pétrochimie qu'être issu de la biomasse, soit directement, c'est-à-dire qu'il est lui-même extrait de la biomasse ou produit par cette biomasse (production par une culture bactérienne ou fongique par exemple), soit indirectement, c'est-à-dire par transformation d'un précurseur qui, lui, est extrait de la biomasse ou produit par la biomasse.

Toutefois, dans le cadre de l'invention, on préfère que le composé A et, donc, le composé A' à partir duquel il est obtenu soient issus de la biomasse.

À cet égard, on rappelle que la biomasse est représentée par toute matière organique d'origine végétale (algues incluses), animale, bactérienne ou fongique.

C'est la raison pour laquelle on préfère choisir le composé A' parmi ceux des composés précités qui peuvent être obtenus à partir de la biomasse, c'est-à-dire le chavicol, l'eugénol, le résorcinol, l'hydroquinone, le pyrocathécol, le phloroglucinol, le pyrogallol, l'hydroxyquinol, le resvératrol, les dimères de monophénols allylés, l'acide parahydroxybenzoïque, l'acide gallique et ses cinq isomères, l'acide vanillique, l'acide salicylique, l'acide 3-hydroxybenzoïque, l'acide 4-hydroxybenzoïque, l'acide protocatéchique et ses cinq isomères, et plus encore, parmi :
- l'eugénol qui peut notamment être obtenu par extraction d'huiles essentielles de clou de girofle ;
- le phloroglucinol qui peut notamment être obtenu par bioconversion du glucose, du xylose ou de l'arabinose comme décrit dans la demande internationale PCT WO 2006/044290 (référence **[2]**) ;
- le résorcinol qui peut notamment être obtenu par hydrogénation du phloroglucinol comme également décrit dans la référence **[2]** ;
- l'acide gallique qui peut notamment être obtenu par hydrolyse des tanins galliques présents dans de nombreux végétaux ou par bioconversion du glucose comme décrit dans la demande internationale PCT WO 01/071020 (référence **[3]**) ;
- le pyrogallol qui peut notamment être obtenu par décarboxylation de l'acide gallique, par exemple par la chaleur ou par biocatalyse comme également décrit dans la référence **[3]** précitée ; et
- les dimères d'eugénol tel que le dimère de formule (I) ci-après : 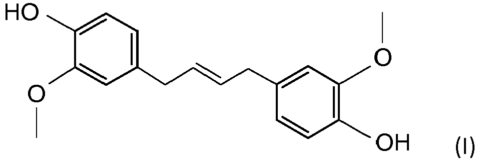 qui peut être obtenu à partir de l'eugénol par une réaction de métathèse du type de celle décrite par H. E. Blackwell et al. dans J. Am. Chem. Soc. 2000, 122, 58-71 (référence **[4]**).

La prépolymérisation du composé A peut être réalisée par voie thermique, par exemple en soumettant ce composé à une série de paliers de 2 heures chacun à 180°C (avec un retour à la température ambiante entre chaque palier) et ce, sous atmosphère inerte (azote ou argon), de sorte à obtenir une matière dite au stade B (ou « *B-stage* » en langue anglaise), comprenant un mélange de prépolymères et des monomères résiduels. La prépolymérisation peut être arrêtée à partir du moment où la chaleur dégagée pendant la polymérisation de la matière au stade B est inférieure à la chaleur dégagée pendant la polymérisation du monomère seul, ce qui peut aisément être déterminé par une analyse calorimétrique différentielle à balayage (ou DSC). Typiquement, le nombre de paliers se situe entre 10 et 15.

Conformément à l'invention, le composé B, dont le rôle est de permettre un contrôle du profil de polymérisation/réticulation du ou des prépolymères lors du durcissement de la résine (avec notamment une réduction de l'énergie dégagée au cours de ce durcissement), comme démontré dans les exemples qui suivent, peut être tout composé thiolé pour autant qu'il comporte au moins deux fonctions thiols.

Ainsi, le composé B peut aussi bien être issu de la pétrochimie tel que l'éthane-1,2-thiol, le 1,3-propanedithiol, le 1,4-butanedithiol, le 1,5-pentanedithiol, le bis(3-sulfanylpropanoate) de 1,2-éthanediyle, le tris(3-mercaptopropionate) de triméthylolpropane, le tétrakis(3-mercaptopropionate) de pentaérythritol ou l'hexa(3-mercaptopropionate) de dipentaérythritol, qu'être issu de la biomasse.

Toutefois, là également, on préfère que le composé B soit obtenu à partir de la biomasse.

C'est la raison pour laquelle le composé B est, de préférence, le produit d'une thiolation d'un composé B' (c'est-à-dire d'un greffage d'au moins deux fonctions thiols sur ce composé B') qui est, lui-même, issu de la biomasse et qui comprend deux ou plus de deux groupes choisis parmi les groupes hydroxyle et carboxyle.

Aussi, le composé B' est-il, de préférence, choisi parmi :
- les mêmes polyphénols et acides phénoliques issus de la biomasse que ceux mentionnés ci-avant pour le composé A', à savoir le résorcinol, l'hydroquinone, le pyrocathécol, le phloroglucinol, le pyrogallol, l'hydroxyquinol, le resvératrol, les dimères de monophénols allylés, l'acide parahydroxybenzoïque, l'acide gallique et ses cinq isomères, l'acide vanillique, l'acide salicylique, l'acide 3-hydroxybenzoïque, l'acide 4-hydroxybenzoïque, l'acide protocatéchique et ses cinq isomères, et
- des macromolécules polyphénoliques issues de la biomasse comme, par exemple, les lignines et les tanins.

Dans le cadre de l'invention, le terme « lignine » couvre toute lignine issue de la biomasse, quel que soit le mode par lequel elle a été extraite de cette biomasse, ainsi que tout extrait macromoléculaire obtenu par fractionnement d'une lignine.

Plus encore, le composé B' est choisi parmi le phloroglucinol, le résorcinol, l'acide gallique, le pyrogallol, les lignines et le dimère d'eugénol de formule (I) ci-avant.

La thiolation du composé B' peut notamment consister à remplacer l'atome d'hydrogène de chaque groupe hydroxyle ou carboxyle porté par le composé B' par un groupe -(CH₂)₃SH, auquel cas elle peut être réalisée selon un protocole similaire à celui décrit par S. Chatani et al. dans Macromol. 2014, 47(15), 4894-4900 (référence **[5]**), c'est-à-dire en soumettant le composé B' à une réaction d'allylation avec un halogénure d'allyle, typiquement le bromure d'allyle, dans un milieu fortement basique, puis en soumettant le composé B' ainsi allylé à une réaction d'addition radicalaire avec l'acide thioacétique en présence d'un agent producteur de radicaux libres tel que l'azobisiso-butyronitrile (ou AIBN), puis en soumettant le produit résultant à une réaction permettant de transformer les groupes thioesters qu'il porte en groupes thiols.

Selon une disposition particulièrement préférée de l'invention, les composés A et B sont tous deux issus de la biomasse, auquel cas la résine peut être qualifiée de résine totalement biosourcée.

Cette résine biosourcée peut, par exemple, comprendre :
- au moins un prépolymère de résorcinol propargylé, d'acide gallique propargylé ou d'un dimère d'eugénol propargylé ; et
- un résorcinol thiolé, un acide gallique thiolé, une lignine thiolée ou un dimère d'eugénol thiolé.

Dans cette résine, les proportions respectives du ou des prépolymères et du composé B peuvent varier dans de larges gammes en fonction de la destination de la résine et, donc, des propriétés que l'on souhaite lui conférer mais aussi des propriétés que l'on souhaite conférer aux matériaux qu'elle va servir à fabriquer.

Ainsi, par exemple, lorsque la résine est destinée à la fabrication d'un matériau composite ablatif de protection thermique et qu'un taux de coke supérieur à 50% est recherché, alors cette résine comprend typiquement de 80 à 95 parties en masse de prépolymère(s) pour 5 à 20 parties en masse de composé B.

Conformément à l'invention, la résine peut comprendre de plus un composé C qui est le produit d'une propargylation d'une macromolécule polyphénolique issue de la biomasse comme, par exemple, une lignine ou un tanin, auquel cas la résine peut, par exemple, comprendre :
- au moins un prépolymère de résorcinol propargylé, d'acide gallique propargylé ou d'un dimère d'eugénol propargylé ;
- un résorcinol thiolé, un acide gallique thiolé, une lignine thiolée ou un dimère d'eugénol thiolé ; et
- une lignine propargylée.

Là également, les proportions respectives du ou des prépolymères, du composé B et du composé C peuvent varier dans de larges gammes en fonction de la destination de la résine. Toutefois, lorsque cette résine est destinée à la fabrication d'un matériau composite ablatif de protection thermique et qu'un taux de coke supérieur à 50% est recherché, alors elle comprend typiquement de 30 à 94 parties en masse de prépolymère(s), de 5 à 20 parties en masse de composé B et de 1 à 50 parties en masse de composé C, la proportion du composé C étant, mieux encore, comprise entre 1 et 30 parties en masse dans le cas où ce composé est une lignine.

La résine peut aussi comprendre de plus un ou plusieurs adjuvants qui, là également, sont choisis en fonction de la destination de cette résine ainsi que de son mode de mise en œuvre et, notamment, de la manière dont on souhaite réaliser son durcissement.

Ainsi, par exemple, ce ou ces adjuvants peuvent être choisis parmi les amorceurs (ou initiateurs) latents de polymérisation/réticulation dans le cas où le durcissement de la résine est prévu pour être réalisé par voie thermique ou partiellement par voie photochimique, les accélérateurs de polymérisation/réticulation, les inhibiteurs de polymérisation/réticulation, les antioxydants, les flexibilisants, les plastifiants, les agents anti-UV, les agents ignifugeants, les agents compatibilisants, les agents anti-retrait et les charges, tous ces adjuvants et les conditions dans lesquelles ils peuvent être utilisés étant bien connus de l'homme du métier. Sur ce point, le lecteur pourra se référer à des ouvrages de référence tels que les « TECHNIQUES DE l'INGENIEUR », volumes « Plastiques et Composites ».

Conformément à l'invention, le durcissement de la résine peut être réalisé par tout moyen susceptible d'induire la polymérisation/réticulation du ou des prépolymères et, notamment, par application d'un traitement thermique, d'un traitement lumineux (lumière visible, UV ou IR) ou d'un rayonnement ionisant (faisceau d'électrons, rayonnement β ou γ, rayons X, ...).

Bien que la résine selon l'invention ait une composition très différente de celle des résines phénoliques et puisse être, si on le souhaite, totalement biosourcée, elle s'est révélée présenter des propriétés analogues à celles des résines phénoliques et, notamment, à celles de la résine phénolique Ablaphene RA 101 qui est couramment utilisée dans l'aérospatiale pour l'élaboration de matériaux composites ablatifs, tant en termes de taux de coke, de température de transition vitreuse que de viscosité.

La résine selon l'invention est donc susceptible d'être utilisée dans toutes les applications des résines phénoliques et, plus spécifiquement, dans la fabrication de matériaux composites ablatifs.

Aussi, l'invention a-t-elle également pour objet un matériau qui est caractérisé en ce qu'il est obtenu par durcissement d'une résine durcissable telle que précédemment définie, ce durcissement étant éventuellement suivi d'un traitement thermique pour améliorer encore la stabilité thermomécanique de ce matériau.

Conformément à l'invention, ce matériau est, de préférence, un matériau formant la matrice d'un matériau composite du type comprenant une matrice dans laquelle se trouve un renfort.

Le renfort présent dans le matériau composite peut être de différents types.

Ainsi, il peut notamment s'agir d'un renfort constitué de fibres telles que des fibres de verre, des fibres de quartz, des fibres de carbone, des fibres de graphite, des fibres de silice, des fibres métalliques comme des fibres d'acier ou des fibres d'aluminium, des fibres de bore, des fibres céramiques comme des fibres de carbure de silicium ou de carbure de bore, des fibres organiques de synthèse comme des fibres d'aramide, des fibres de polyéthylène, des fibres de polyester ou des fibres de poly(p-phénylène benzobisoxazole), plus connues sous le sigle PBO, des fibres organiques naturelles comme des fibres de chanvre, des fibres de lin ou des fibres de soie, ou encore de mélanges de telles fibres, auquel cas ce renfort peut se présenter, selon la nature des fibres qui le constituent, sous la forme de fils coupés, de fibres broyées, de mats à filaments continus, de mats à filaments coupés, de stratifils (ou « *rovings* » en langue anglaise), de tissus, de tricots, de feutres, etc, ou encore sous la forme de complexes réalisés par association de différents types de matériaux plans.

Il peut également s'agir d'un renfort constitué de particules telles que des particules de liège ou des charges réfractaires du type tungstène, oxyde de magnésium, oxyde de calcium, alumine, silice, dioxyde de zirconium, dioxyde de titane, oxyde de béryllium, etc.

Par ailleurs, la fabrication du matériau composite peut être réalisée par toutes les techniques connues de l'homme du métier des matériaux composites comme, par exemple, par imprégnation, par moulage par injection simultanée, par moulage par drapage autoclavé, par moulage sous vide, par moulage par injection basse pression de résine (ou RTM pour « *Resin Transfert Molding* »), par moulage à la presse à froid "*voie humide*" basse pression, par moulage par injection de compound (ou BMC pour « *Bulk Molding Compound* »), par moulage par compression de mats préimprégnés (ou SMC pour « *Sheet Molding Compound* »), par enroulement filamentaire, par centrifugation ou encore par pultrusion, l'imprégnation étant préférée dans le cas où le renfort est constitué de fibres.

De préférence, le matériau composite est un matériau composite ablatif et, plus spécifiquement, un matériau composite ablatif de protection thermique, notamment pour l'aérospatiale.

L'invention a, en outre, pour objet l'utilisation d'une résine durcissable telle que précédemment définie pour la fabrication d'un matériau composite ablatif et, plus spécifiquement, d'un matériau ablatif de protection thermique, notamment pour l'aérospatiale.

D'autres caractéristiques et avantages de l'invention apparaîtront à la lecture du complément de description qui suit, qui se rapporte à des exemples de préparation de résines selon l'invention et de démonstration de leurs caractéristiques et qui est donné en référence aux figures annexées.

Bien entendu, ce complément de description n'est donné qu'à titre d'illustration de l'objet de l'invention et ne constitue en aucun cas une limitation de cet objet.

### BRÈVE DESCRIPTION DES FIGURES

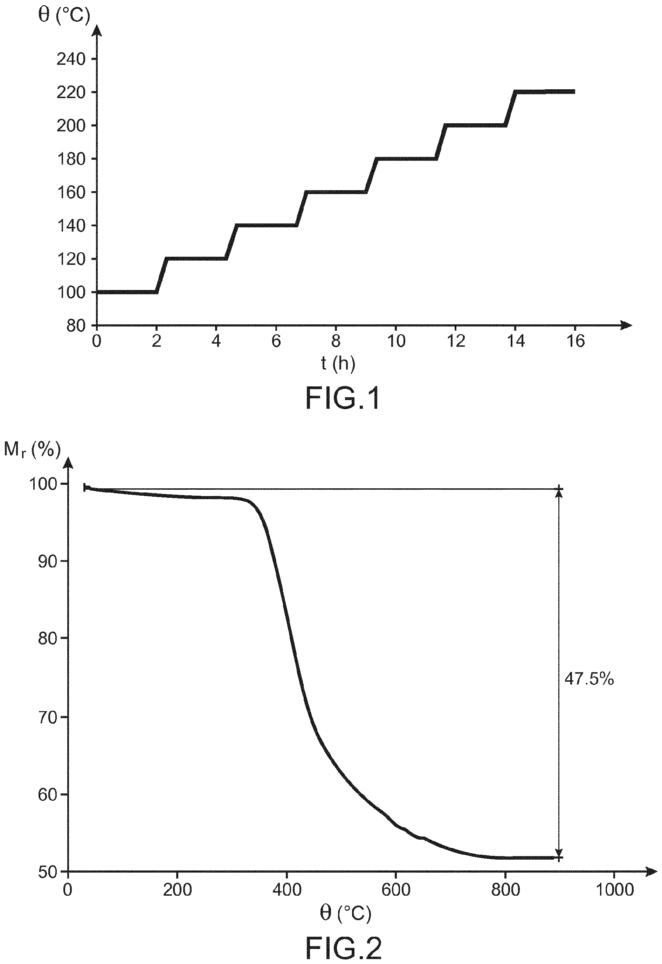

La figure 1 illustre les modalités du traitement thermique ayant été appliqué à des résines selon l'invention pour leur durcissement dans les expérimentations qui sont rapportées dans les exemples 1 à 4 qui suivent; la température, notée θ et exprimée en °C, est indiquée sur l'axe des ordonnées tandis que le temps, noté t et exprimé en heures, est indiqué sur l'axe des abscisses.
La figure 2 illustre la courbe d'analyse thermogravimétrique (ou courbe d'ATG) obtenue pour un échantillon d'une première résine selon l'invention - dénommée ci-après résine R4 - après durcissement ; la masse résiduelle de l'échantillon, notée Mᵣ et exprimée en % de la masse initiale, est indiquée sur l'axe des ordonnées tandis que la température, notée θ et exprimée en °C, est indiquée sur l'axe des abscisses.

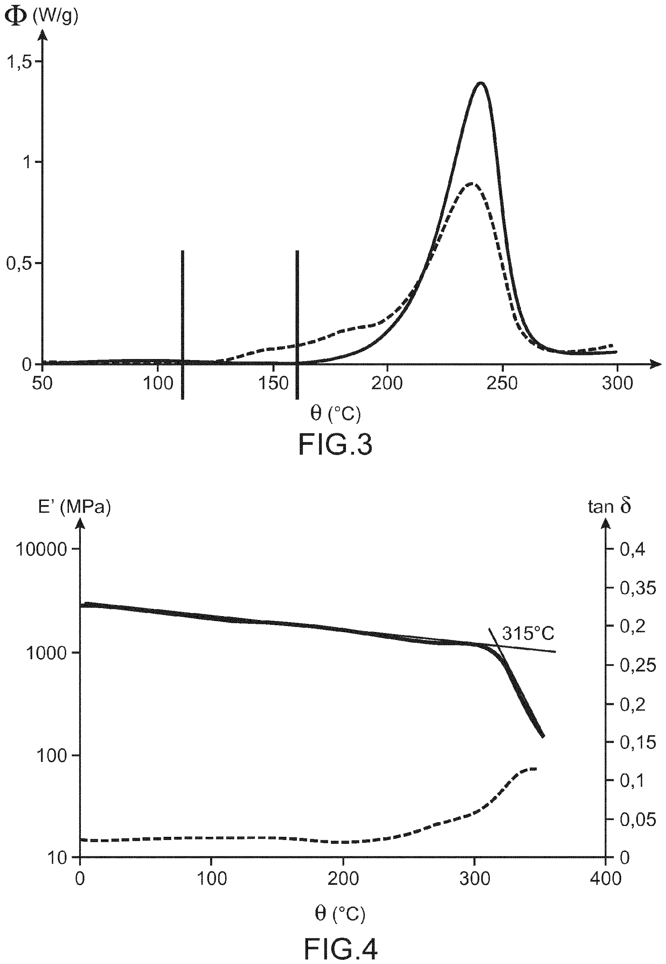

La figure 3 illustre la courbe d'analyse calorimétrique différentielle à balayage (ou courbe de DSC) obtenue pendant le durcissement d'un échantillon de la résine R4 (courbe en pointillés) ; à titre de comparaison, est également représentée la courbe de DSC obtenue, dans les mêmes conditions, pendant le durcissement d'un échantillon témoin, ne se différenciant de l'échantillon de la résine R4 qu'en ce qu'il ne comprend pas de composé B (courbe en trait plein) ; le flux de chaleur, noté Φ et exprimé en W/g, est indiqué sur l'axe des ordonnées, tandis que la température, notée θ et exprimée en °C, est indiquée sur l'axe des abscisses.
La figure 4 illustre la courbe du module de conservation, noté E' et exprimé en MPa (courbe en trait plein), et la courbe du facteur de perte ou tan δ (courbe en pointillés) telles qu'obtenues par analyse mécanique dynamique (ou DMA) pour un échantillon de la résine R4 après durcissement; le module de conservation et le tan δ sont indiqués sur les axes des ordonnées, respectivement de gauche et de droite, tandis que la température, notée θ et exprimée en °C, est indiquée sur l'axe des abscisses.

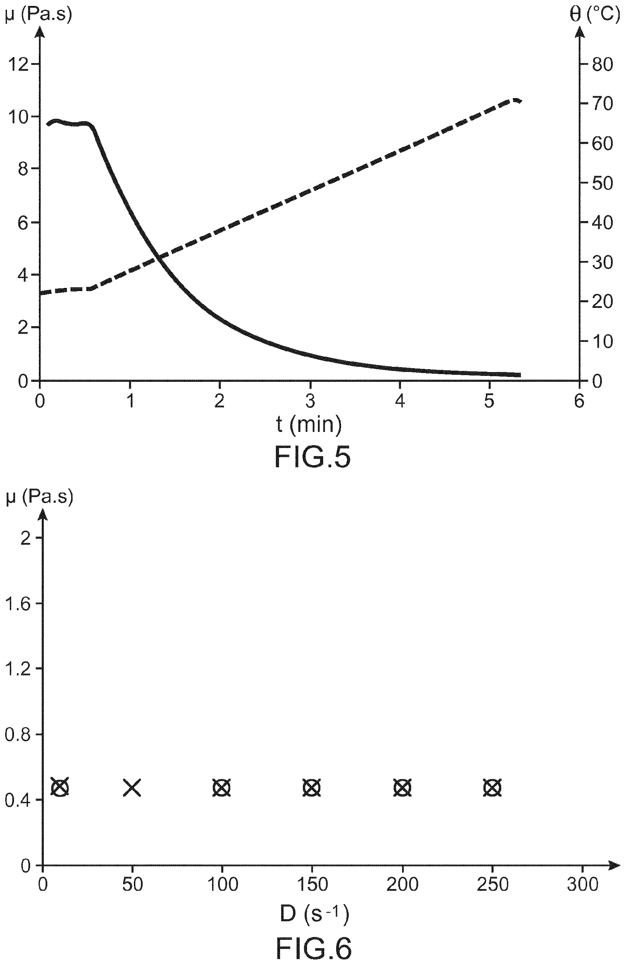

La figure 5 illustre l'évolution de la viscosité dynamique, notée µ et exprimée en Pa.s (courbe en trait plein), de la résine R4, en fonction de la température, notée θ et exprimée en °C (courbe en pointillés).
La figure 6 illustre l'évolution de la viscosité dynamique, notée µ et exprimée en Pa.s, de la résine R4, telle que mesurée à la température de 55°C, en fonction du taux de cisaillement, noté D et exprimé en s⁻¹, qui lui a été appliqué et ce, au cours d'un cycle de charge (×) et d'un cycle de décharge (o).

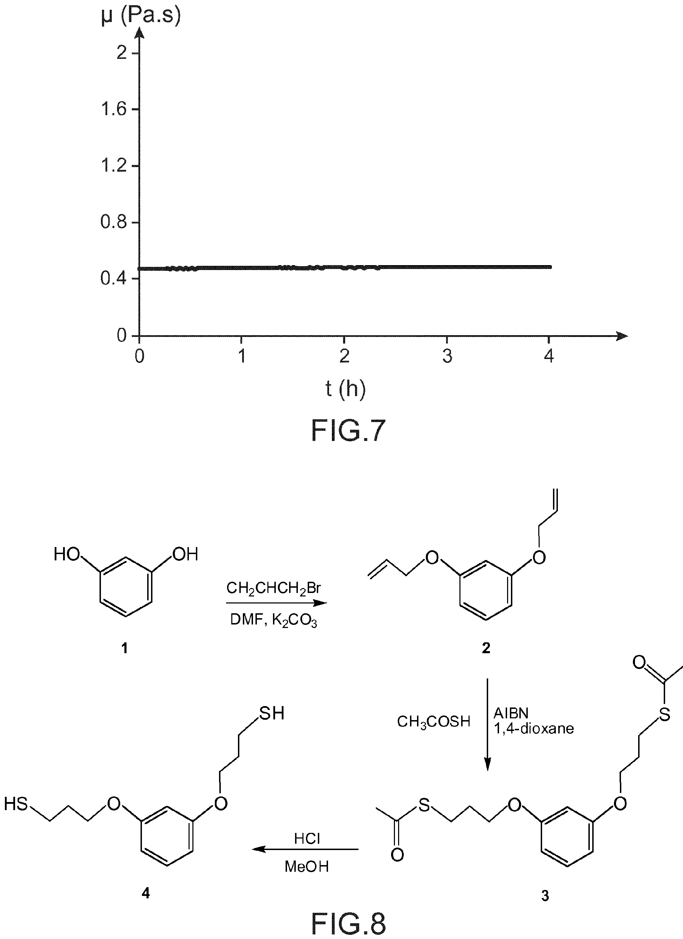

La figure 7 illustre l'évolution de la viscosité dynamique, notée µ et exprimée en Pa.s, de la résine R4, telle que déterminée à la température de 55°C et pour un taux de cisaillement de 10 s⁻¹, en fonction du temps, noté t et exprimé en heures.
La figure 8 illustre le schéma réactionnel ayant été suivi pour la préparation d'un résorcinol thiolé qui est rapportée dans l'exemple 2 ci-après.

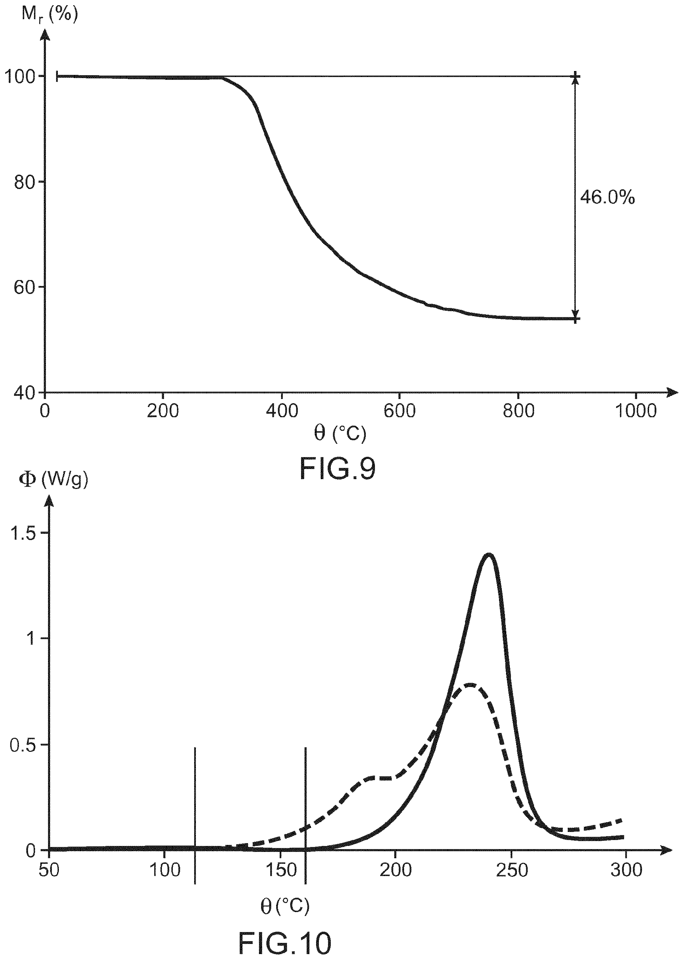

La figure 9 illustre la courbe d'ATG obtenue pour un échantillon d'une deuxième résine selon l'invention - dénommée ci-après résine R6 - après durcissement ; la masse résiduelle de l'échantillon, notée Mᵣ et exprimée en % de la masse initiale, est indiquée sur l'axe des ordonnées tandis que la température, notée θ et exprimée en °C, est indiquée sur l'axe des abscisses.
La figure 10 illustre la courbe de DSC obtenue pendant le durcissement d'un échantillon de la résine R6 (courbe en pointillés) ; à titre de comparaison, est également représentée la courbe de DSC obtenue, dans les mêmes conditions, pendant le durcissement d'un échantillon témoin, ne se différenciant de l'échantillon de la résine R6 qu'en ce qu'il ne comprend pas de composé B (courbe en trait plein) ; le flux de chaleur, noté Φ et exprimé en W/g, est indiqué sur l'axe des ordonnées tandis que la température, notée θ et exprimée en °C, est indiquée sur l'axe des abscisses.

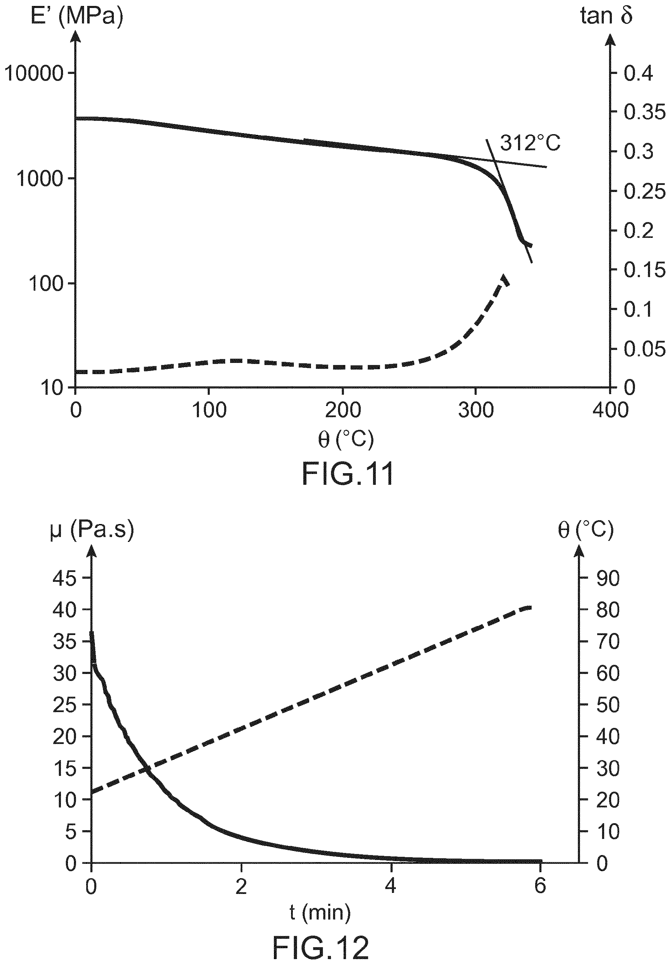

La figure 11 illustre la courbe du module de conservation, noté E' et exprimé en MPa (courbe en trait plein), et la courbe du facteur de perte ou tan δ (courbe en pointillés) telles qu'obtenues par DMA pour un échantillon de la résine R6 après durcissement; le module de conservation et le tan δ sont indiqués sur les axes des ordonnées, respectivement de gauche et de droite, tandis que la température, notée θ et exprimée en °C, est indiquée sur l'axe des abscisses.
La figure 12 illustre l'évolution de la viscosité dynamique, notée µ et exprimée en Pa.s (courbe en trait plein), de la résine R6, en fonction de la température, notée θ et exprimée en °C (courbe en pointillés).

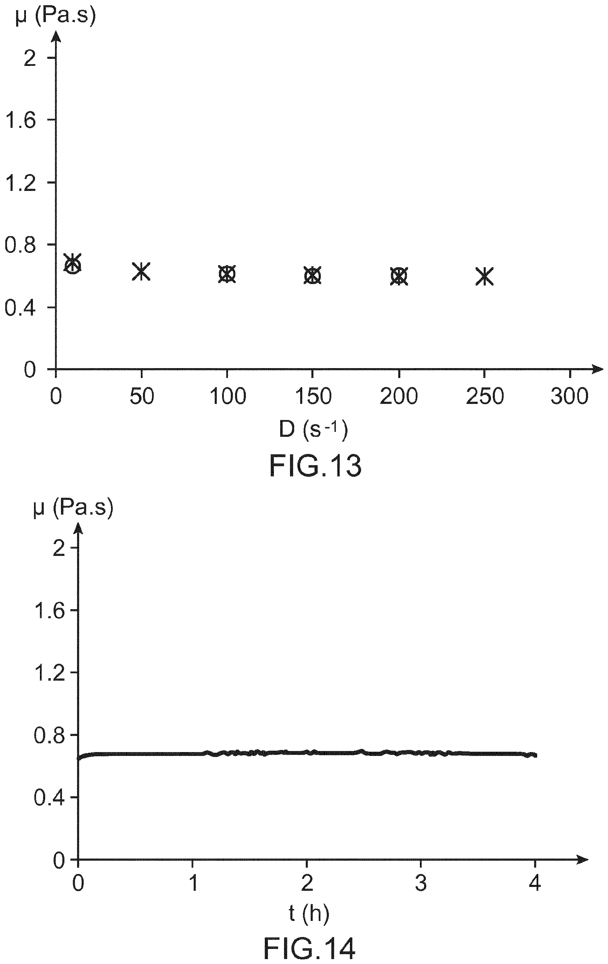

La figure 13 illustre l'évolution de la viscosité dynamique, notée µ et exprimée en Pa.s, de la résine R6, telle que mesurée à la température de 65°C, en fonction du taux de cisaillement, noté D et exprimé en s⁻¹, qui lui a été appliqué et ce, au cours d'un cycle de charge (×) et d'un cycle de décharge (o).
La figure 14 illustre l'évolution de la viscosité dynamique, notée µ et exprimée en Pa.s, de la résine R6, telle que déterminée à la température de 65°C et pour un taux de cisaillement de 10 s⁻¹, en fonction du temps, noté t et exprimé en heures.

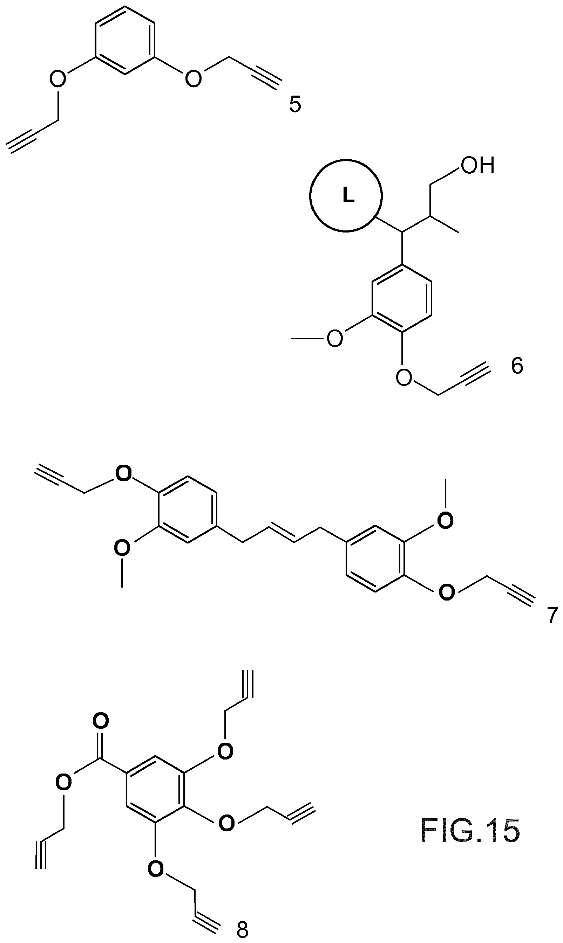

La figure 15 illustre les structures chimiques du résorcinol propargylé, noté 5, d'une unité phénylpropanoïde, noté 6, d'une lignine propargylée (le reste de la lignine propargylée étant symbolisé par la lettre L inscrite dans un cercle), d'un dimère d'eugénol propargylé, noté 7, et de l'acide gallique propargylé, noté 8.

### EXPOSÉ DÉTAILLÉ DE MODES DE RÉALISATION PARTICULIERS DE L'INVENTION

### EXEMPLE 1 : Préparation et caractéristiques d'un premier type de résines durcissables selon l'invention

Le présent exemple se rapporte à un premier type de résines selon l'invention qui comprennent :
- un mélange de prépolymères obtenus par prépolymérisation de résorcinol propargylé (composé A) ; et
- du tétrakis(3-mercaptopropionate) de pentaérythritol (PETMP) comme composé B.

### 1.1 - Préparation des résines :

### * Préparation du résorcinol propargylé :

Le résorcinol propargylé est préparé selon un protocole inspiré de celui décrit dans la référence **[1]** précitée.

Pour ce faire, 100 g de résorcinol (SIGMA-ALDRICH) sont solubilisés dans 1,7 L de *N,N*-diméthylformamide (DMF) auquel est ajouté 1,27 kg de carbonate de potassium (K₂CO₃) sous agitation mécanique. Puis, 115 mL de bromure de propargyle en solution à 80% dans le toluène sont ajoutés à la solution. L'agitation mécanique est maintenue pendant 12 heures. Après filtration et dilution dans l'acétate d'éthyle, le milieu est lavé 3 fois à la saumure et 2 fois à l'eau permutée. La phase organique est séchée sur du sulfate de magnésium anhydre (MgSO₄), filtrée et concentrée sous pression réduite. Sont ainsi obtenus 156 g de résorcinol propargylé, noté **5** sur la figure 15 (Rendement : 92%).

### * Prépolymérisation du résorcinol propargylé :

50 g du résorcinol propargylé obtenu ci-avant sont introduits dans un ballon bicol de 250 mL contenant un barreau aimanté. Le ballon est surmonté d'un réfrigérant à eau. Le milieu est soumis à un traitement thermique comprenant des paliers de 2 heures à 180°C séparés les uns des autres par un retour à la température ambiante, sous flux d'azote. Après 10 paliers à 180°C, une substance visqueuse se fluidifiant par élévation de la température est obtenue, qui correspond à un mélange de prépolymères de résorcinol propargylé (Rendement : 100%).

### * Mélange des prépolymères de résorcinol propargylé et du PETMP :

Cinq résines, dénommées ci-après résines R1, R2, R3, R4 et R5, sont préparées en ajoutant le mélange de prépolymères de résorcinol propargylé obtenu ci-avant à du PETMP (disponible chez SIGMA-ALDRICH), sous simple agitation manuelle et dans des rapports massiques prépolymères de résorcinol propargylé/PETMP de 95/5, 90/10, 85/15, 80/20 et 75/25 respectivement.

### 1.2 - Durcissement des résines :

Pour leur durcissement, des échantillons des résines R1 à R5 sont placés dans une étuve préalablement chauffée à 100°C et soumis au traitement thermique dont les modalités sont illustrées sur la figure 1.

Comme visible sur cette figure, ce traitement thermique comprend 7 paliers situés respectivement à 100°C, 120°C, 140°C, 160°C, 180°C, 200°C et 220°C, de 2 heures chacun et séparés les uns des autres d'une montée en température de 1°C/minute.

### 1.3 - Taux de coke après durcissement :

Les taux de coke des résines R1 à R5 après durcissement sont déterminés par une ATG que l'on réalise au moyen d'un analyseur thermogravimétrique Q500 de TA Instruments et en appliquant à des échantillons de ces résines durcies une montée en température entre la température ambiante et 900°C, à raison de 5°C par minute et sous flux d'azote.

Pour chaque résine, le taux de coke correspond à la masse résiduelle présentée par l'échantillon de cette résine au terme de l'ATG, exprimée en pourcentage de la masse présentée initialement par cet échantillon.

Les taux de coke ainsi obtenus pour les résines R1 à R5 après durcissement sont consignés dans le tableau I ci-après tandis que la courbe d'ATG obtenue pour l'échantillon de résine R4 est illustrée sur la figure 2.

**Tableau I**

| **Résines** | **Taux de coke** |
|---|---|
| R1 (95/5) | 62% |
| R2 (90/10) | 58% |
| R3 (85/15) | 55% |
| R4 (80/20) | 52% |
| R5 (75/25) | 49% |

Ce tableau montre que la présence de PETMP à hauteur de 20% massiques ou moins dans une résine comprenant un mélange de prépolymères de résorcinol propargylé permet de conférer à cette résine, après durcissement, un taux de coke supérieur à 50%.

### 1.4 - Suivi calorimétrique du durcissement :

L'influence de la présence du PETMP dans la résine R4 sur la réactivité du mélange de prépolymères de résorcinol propargylé est appréciée par une analyse DSC que l'on réalise au moyen d'un calorimètre Q100 de TA Instruments et en soumettant un échantillon de la résine R4 non durcie à une montée en température entre 0°C et 300°C, à raison de 3°C/minute et sous flux d'azote.

La courbe de DSC obtenue pour cet échantillon est illustrée sur la figure 3 (courbe en pointillés). À titre de comparaison, est également représentée sur cette figure la courbe de DSC obtenue, dans les mêmes conditions, pour un échantillon témoin, comprenant le même mélange de prépolymères de résorcinol propargylé que la résine R4 mais exempt de PETMP.

Cette figure montre que la présence du PETMP à hauteur de 20% massiques dans la résine R4 permet à la polymérisation/réticulation du mélange de prépolymères de résorcinol propargylé :
(1) de débuter à plus basse température : 110°C *versus* 160°C ;
(2) de se dérouler dans une plage de températures plus étendue : 110-270°C *versus* 160°C-280°C ; et
(3) de présenter une enthalpie plus faible : 770 J/g *versus* 880 J/g.

La présence du PETMP à hauteur de 20% massiques dans la résine R4 permet donc un meilleur contrôle de la réactivité du mélange de prépolymères de résorcinol propargylé et un déroulement moins violent de la polymérisation/réticulation de ce mélange de prépolymères.

### 1.5 - Absence d'emballement au cours du durcissement :

Aucun emballement n'a été observé au cours du durcissement des résines R1 à R5.

Par contre, le durcissement de résines comprenant le même mélange de prépolymères de résorcinol propargylé que les résines R1 à R5 mais exemptes de PETMP a donné lieu à des emballements, auquel cas la matière se carbonise avec un fort dégagement de fumée.

### 1.6 - Perte de masse au cours du durcissement :

La masse perdue par la résine R4 au cours de son durcissement est déterminée en soumettant un échantillon de cette résine à une montée en température entre 100 et 220°C et en comparant le poids de cet échantillon avant et après ce traitement thermique.

La perte de masse est de 10%.

### 1.7 - Température de transition vitreuse :

La température de transition vitreuse de la résine R4 après durcissement est déterminée par une DMA que l'on réalise au moyen d'un analyseur mécanique dynamique Q800 de TA Instruments (mode simple levier, fréquence de 1 Hz, amplitude de 30 µm) et en soumettant un échantillon parallélépipédique (17,5 mm x 2 mm x 10 mm) de la résine R4 durcie à une montée en température entre 0°C et 350°C, à raison de 3°C/minute.

Les résultats de cette analyse sont illustrés sur la figure 4 qui montre la courbe du module de conservation (courbe en trait plein) et la courbe du facteur de perte ou tan δ (courbe en pointillés) obtenues pour cet échantillon en fonction de la température.

Comme visible sur cette figure, la chute du module de conservation de la résine R4 durcie se produit à 315°C. La température de transition vitreuse de cette résine est donc de 315°C.

### 1.8 - Caractéristiques rhéologiques avant durcissement :

Des échantillons de la résine R4 non durcie sont soumis à des mesures rhéologiques que l'on réalise au moyen d'un rhéomètre ARES de TA Instruments (géométrie cône/plan Ø = 50 mm, entrefer = 50 µm) équipé d'un système de régulation de la température par effet Peltier (APS de TA Instruments).

Les résultats de ces mesures sont illustrés sur les figures 5 à 7 qui représentent :
figure 5 : l'évolution de la viscosité dynamique de la résine R4 (courbe en trait plein) en fonction de la température (courbe en pointillés) ;
figure 6 : l'évolution de la viscosité dynamique de la résine R4 à température constante (55°C) en fonction du taux de cisaillement et ce, au cours d'un cycle de charge (x) et d'un cycle de décharge (o) ;
figure 7 : l'évolution de la viscosité dynamique de la résine R4 à température constante (55°C) et à taux de cisaillement constant (10 s⁻¹) en fonction du temps.

Ces figures montrent :
- d'une part, que la viscosité dynamique de la résine R4 est inférieure à 2 Pa.s au-delà de 39°C (figure 5) ;
- d'autre part, que la résine R4 a un comportement newtonien, c'est-à-dire que sa viscosité dynamique est indépendante du taux de cisaillement (figure 6) ; et
- enfin, que la viscosité dynamique de la résine R4 est très stable au cours du temps et peut être maintenue à une valeur inférieure à 2 Pa.s pendant au moins 4 heures à une température qui est inférieure à 80°C (figure 7), ce qui permet d'envisager une utilisation de cette résine dans des procédés de fabrication de matériaux composites par imprégnation sans recours à des solvants organiques.

### EXEMPLE 2 : Préparation et caractéristiques d'un deuxième type de résine durcissable selon l'invention

Le présent exemple se rapporte à un deuxième type de résine selon l'invention, qui comprend :
- un mélange de prépolymères obtenus par prépolymérisation de résorcinol propargylé (composé A) ; et
- du résorcinol thiolé comme composé B.

### 2.1 - Préparation de la résine :

Le mélange de prépolymères de résorcinol propargylé est préparé comme décrit au point 1.1 de l'exemple 1 ci-avant tandis que le résorcinol thiolé est préparé en suivant le schéma réactionnel illustré sur la figure 8, qui est inspiré de celui décrit dans la référence **[5]** précitée.

### * Préparation du résorcinol thiolé :

Comme visible sur la figure 8, la première étape de cette préparation consiste à soumettre du résorcinol, noté **1**, à une réaction d'allylation.

Pour ce faire, 11,61 g de résorcinol sont solubilisés dans 465 mL de DMF, dans un réacteur de 2,5 L dont le contenu est agité mécaniquement. Puis, 150 g de K₂CO₃ et 19 mL de bromure d'allyle sont ajoutés successivement au milieu. La réaction se déroule sur 12 heures à température ambiante. Le milieu réactionnel est ensuite dilué dans l'acétate d'éthyle et filtré. Le lavage est effectué par extraction à la saumure et à l'eau permutée. La phase organique est séchée sur du MgSO₄ anhydre et concentrée sous pression réduite. Sont ainsi obtenus 13,18 g du composé noté **2** sur la figure 8 (Rendement : 66%).

La deuxième étape consiste à soumettre le composé **2** à une réaction d'addition radicalaire avec l'acide thioacétique pour remplacer les groupes allyles par des groupes thioesters.

Pour ce faire, 13,06 g du composé **2** et 5,56 g d'azobisisobutyronitrile (AIBN) sont solubilisés dans 59 mL de 1,4-dioxane. Le milieu est dégazé pendant 40 minutes en faisant buller de l'argon dans le milieu. Un excès d'acide thioacétique (18 mL) est ajouté dans le milieu laissé sous argon. La température est portée à 63°C. Après 24 heures d'agitation et retour à la température ambiante, le milieu est dilué dans de l'éther diéthylique. La phase organique est lavée avec une solution de bicarbonate de soude (NaHCO₃) saturée, avec de la saumure et enfin de l'eau permutée. Après évaporation de l'éther diéthylique, 15,52 g du composé noté **3** sur la figure 8 sont obtenus sous la forme de cristaux blancs (Rendement : 66%).

La troisième étape consiste à soumettre le composé **3** à une solvolyse en milieu hydroalcoolique pour transformer les deux groupes thioesters en groupes thiols.

Pour ce faire, 15,50 g du composé **3** sont introduits dans un ballon bicol de 250 mL surmonté d'un réfrigérant à eau. Puis, 150 mL de méthanol et 18 mL d'acide chlorhydrique (HCl) concentré sont ajoutés dans le ballon. Le milieu est placé sous agitation magnétique et la température est portée à 70°C pendant 3 heures. Après retour à la température ambiante, 200 mL de chloroforme et 200 mL d'eau permutée sont ajoutés au milieu. La phase aqueuse est extraite 4 fois avec 200 mL de chloroforme. Les fractions de phase organique sont rassemblées et concentrées sous pression réduite.

Sont ainsi obtenus 8,19 g d'un produit (Rendement: 70%) dont le spectre infrarouge (qui montre l'absence de la bande d'absorption des groupes -OH du résorcinol et l'apparition d'un signal à 2565 cm⁻¹ indiquant la présence de groupes -SH), l'analyse élémentaire (calculé : 55,8% C, 7,02% H, 24,8% S ; trouvé : 55,6% C, 7,21% H, 24,8% S) et les spectres RMN ¹³C et ¹H confirment qu'il s'agit bien de résorcinol thiolé, noté **4** sur la figure 8.

### * Mélange des prépolymères de résorcinol propargylé et du résorcinol thiolé :

Une résine, dénommée ci-après résine R6, est préparée en ajoutant le mélange de prépolymères de résorcinol propargylé au résorcinol thiolé, sous simple agitation manuelle et dans un rapport massique permettant l'introduction d'une quantité de groupes thiols identique à celle présente dans la résine R4 de l'exemple 1 ci-avant, ce qui donne un rapport massique prépolymères de résorcinol propargylé/résorcinol thiolé de 79/21.

### 2.2 - Durcissement de la résine :

Le durcissement de la résine R6 est réalisé dans des conditions identiques à celles décrites au point 1.2 de l'exemple 1 ci-avant.

### 2.3 - Taux de coke après durcissement :

Le taux de coke de la résine R6 après durcissement est déterminé en soumettant un échantillon de cette résine durcie à une ATG que l'on réalise dans des conditions identiques à celles décrites au point 1.3 de l'exemple 1 ci-avant.

La courbe d'ATG obtenue pour l'échantillon de résine R6 est illustrée sur la figure 9.

Cette figure montre que le taux de coke de la résine R6 est de 54%.

### 2.4 - Suivi calorimétrique du durcissement :

L'influence de la présence du résorcinol thiolé dans la résine R6 sur la réactivité du mélange de prépolymères de résorcinol propargylé est appréciée en soumettant un échantillon de résine R6 non durcie à une analyse DSC que l'on réalise dans des conditions identiques à celles décrites au point 1.4 de l'exemple 1 ci-avant.

La courbe de DSC obtenue pour cet échantillon est illustrée sur la figure 10 (courbe en pointillés). À titre de comparaison, est également représentée sur cette figure la courbe de DSC obtenue, dans les mêmes conditions, pour un échantillon témoin, comprenant le même mélange de prépolymères de résorcinol propargylé que la résine R6 mais exempt de résorcinol thiolé.

Cette figure montre que la présence du résorcinol thiolé à hauteur de 21% massiques dans la résine R6 produit les mêmes effets que ceux produits par la présence de PETMP dans la résine R4.

La présence du résorcinol thiolé à hauteur de 21% massiques dans la résine R6 permet donc un meilleur contrôle de la réactivité du mélange de prépolymères de résorcinol propargylé et un déroulement moins violent de la polymérisation/ réticulation de ce mélange de prépolymères.

### 2.5 - Absence d'emballement au cours du durcissement :

Aucun emballement n'a été observé au cours du durcissement de la résine R6.

### 2.6 - Perte de masse au cours du durcissement :

La masse perdue par la résine R6 au cours de son durcissement est déterminée dans les mêmes conditions que celles précédemment décrites au point 1.6 de l'exemple 1 ci-avant.

La perte de masse est de 12%.

### 2.7 - Température de transition vitreuse :

La température de transition vitreuse de la résine R6 après durcissement est déterminée en soumettant un échantillon de cette résine durcie à une DMA que l'on réalise dans les mêmes conditions que celles précédemment décrites au point 1.7 de l'exemple 1 ci-avant.

Les résultats de cette analyse sont illustrés sur la figure 11 qui montre la courbe du module de conservation (courbe en trait plein) et la courbe du facteur de perte ou tan δ (courbe en pointillés) obtenues pour cet échantillon en fonction de la température.

Cette figure montre que la chute du module de conservation de la résine R6 durcie se produit à 312°C. La température de transition vitreuse de cette résine est donc de 312°C.

### 2.8 - Caractéristiques rhéologiques avant durcissement :

Des échantillons de la résine R6 non durcie sont soumis à des mesures rhéologiques que l'on réalise au moyen du même appareillage que celui décrit au point 1.8 de l'exemple 1 ci-avant.

Les résultats de ces mesures sont illustrés sur les figures 12 à 14 qui représentent :
figure 12 : l'évolution de la viscosité dynamique de la résine R6 (courbe en trait plein) en fonction de la température (courbe en pointillés) ;
figure 13 : l'évolution de la viscosité dynamique de la résine R6 à température constante (65°C) en fonction du taux de cisaillement et ce, au cours d'un cycle de charge (×) et d'un cycle de décharge (o) ;
figure 14 : l'évolution de la viscosité dynamique de la résine R6 à température constante (65°C) et à taux de cisaillement constant (10 s⁻¹) en fonction du temps.

Ces figures montrent :
- d'une part, que la viscosité dynamique de la résine R6 est inférieure à 2 Pa.s au-delà de 51°C (figure 12) ;
- d'autre part, que la résine R6 a un comportement newtonien (figure 13) ; et
- enfin, que la viscosité dynamique de la résine R6 est très stable au cours du temps et peut être maintenue à une valeur inférieure à 2 Pa.s pendant au moins 4 heures à une température qui est inférieure à 80°C (figure 14).

### EXEMPLE 3 : Préparation et caractéristiques d'un troisième type de résine durcissable selon l'invention

Le présent exemple se rapporte à un troisième type de résine selon l'invention, qui comprend :
- un mélange de prépolymères obtenus par prépolymérisation de résorcinol propargylé (composé A) ; et
- une lignine thiolée comme composé B.

### 3.1 - Préparation de la résine :

Le mélange de prépolymères de résorcinol propargylé est préparé comme décrit au point 1.1 de l'exemple 1 ci-avant tandis que la lignine thiolée est préparée en suivant un protocole inspiré de celui décrit dans la référence **[5]** précitée.

### * Préparation de la lignine thiolée :

La première étape de cette préparation consiste à soumettre une lignine à une réaction d'allylation.

Pour ce faire, 40 g d'une lignine (lignine Kraft Indulin AT) sont solubilisés dans 800 mL d'une solution d'hydroxyde de sodium (NaOH) à 0,5 mol/L dans un réacteur équipé d'un couvercle permettant le passage d'une pale d'agitation et l'installation d'un réfrigérant à eau. Puis, 62 mL de bromure d'allyle sont ajoutés et la température du milieu est portée à 60°C pendant 4 heures. Après arrêt de l'agitation, la majorité de la lignine allylée sédimente tandis que la lignine allylée encore dispersée peut être récupérée par centrifugation. La lignine allylée ainsi obtenue est ensuite lavée à l'eau osmosée jusqu'à neutralité de l'eau de lavage. Elle est alors lyophilisée.

Le spectre infrarouge de cette lignine montre une diminution du signal associé aux groupes -OH à 3450 cm⁻¹ et l'apparition d'une nouvelle bande d'absorption à 3078 cm⁻¹ correspondant à la fonctionnalisation d'une partie des groupes -OH de la lignine par des groupes allyles (-CH₂-CH=CH₂).

Une analyse RMN ³¹P après dérivatisation de la lignine avec le 2-chloro-4,4,5,5-tétraméthyl-1,3,2-dioxaphospholane (TMDP) indique que les groupes -OH aromatiques de la lignine ont été fonctionnalisés de manière quasi-quantitative : 3,7 mmol de groupes -OH aromatiques/g de lignine avant allylation *versus* 0,4 mmol de groupes-OH aromatiques restants/g de lignine après allylation.

La deuxième étape consiste à soumettre la lignine allylée à une réaction d'addition radicalaire avec l'acide thioacétique pour remplacer les groupes allyles en groupes thioesters.

Pour ce faire, 10 g de lignine allylée séchée sont solubilisés dans 50 mL de 1,4-dioxane à l'aide d'un agitateur vortex. Puis, 2 g d'AIBN sont solubilisés dans 21 mL de 1,4-dioxane et ajoutés à la solution de lignine allylée. L'oxygène est chassé de l'enceinte de réaction en faisant buller de l'argon dans la solution pendant 40 minutes. Après ajout de 20 mL d'acide thioacétique, le milieu est porté à 70°C pendant 24 heures sous atmosphère inerte. Le produit est ensuite récupéré par précipitation dans un grand volume d'éther diéthylique, filtré et immédiatement dispersé dans une solution saturée de NaHCO₃. La lignine thioestérifiée ainsi obtenue est lavée jusqu'à neutralité de l'eau de lavage et lyophilisée.

Le spectre infrarouge de cette lignine montre la disparition du signal à 3078 cm⁻¹ et l'apparition d'une bande d'aborption très intense à 1689 cm⁻¹ correspondant à la présence des groupes thioesters.

La troisième étape consiste à soumettre la lignine thioestérifiée à une déprotection pour transformer les groupes thioesters en groupes thiols.

Pour ce faire, 8,16 g de cette lignine sont solubilisés dans 75 mL de DMF sous agitation vortex. La solution est dégazée en faisant buller de l'argon dans le milieu. Puis, 3,3 mL d'acide acétique et 2,8 mL d'hydrazine monohydrate sont introduits successivement et goutte à goutte. Après 1 heure d'agitation, la lignine thiolée peut être précipitée dans un large volume d'eau et lavée à l'eau osmosée.

Le spectre infrarouge de cette lignine montre la disparition du signal centré à 1689 cm⁻¹ ainsi que l'apparition d'une bande d'absorption à 2564 cm⁻¹ attribuée à la présence de groupes thiols. L'analyse élémentaire indique que le pourcentage massique de soufre est de 11% *versus* 1,5% pour la lignine brute avant toute modification.

### * Mélange des prépolymères de résorcinol propargylé et de la lignine thiolée :

Une résine, dénommée ci-après résine R7, est préparée en ajoutant le mélange de prépolymères de résorcinol propargylé à la lignine thiolée, sous simple agitation manuelle et dans un rapport massique prépolymères de résorcinol propargylé/lignine thiolée de 86/14.

### 3.2 - Durcissement de la résine :

Le durcissement de la résine R7 est réalisé dans des conditions identiques à celles décrites au point 1.2 de l'exemple 1 ci-avant.

### 3.3 - Caractéristiques de la résine :

La résine R7 est soumise à des analyses pour déterminer son taux de coke après durcissement, sa perte de masse au cours du durcissement et sa température de transition vitreuse, que l'on réalise de la même façon que décrit aux points 1.3, 1.6 et 1.7 de l'exemple 1 ci-avant.

Les résultats sont consignés dans le tableau II ci-après.

**Tableau II**

| | |
|---|---|
| Taux de coke | 62% |
| Perte de masse | 4% |
| Température de transition vitreuse | > 330°C |

### EXEMPLE 4 : Préparation et caractéristiques d'un quatrième type de résine durcissable selon l'invention

Le présent exemple se rapporte à un quatrième type de résine selon l'invention, qui comprend :
- un mélange de prépolymères obtenus par prépolymérisation de résorcinol propargylé (composé A) ;
- du PETMP comme composé B ; et
- une lignine propargylée comme composé C.

### 4.1 - Préparation de la résine :

Le mélange de prépolymères de résorcinol propargylé est préparé comme décrit au point 1.1 de l'exemple 1 ci-avant tandis que la lignine propargylée est préparée comme décrit ci-après.

### * Préparation de la lignine propargylée :

20,1 g de lignine (lignine Kraft Indulin AT) sont solubilisés dans 400 mL d'une solution de NaOH à 0,5 mol/L. Puis 22 mL de bromure de propargyle en solution à 80% dans le toluène sont ajoutés à la solution et la température du milieu est portée et maintenue à 75°C pendant 4 heures. La lignine propargylée est alors récupérée par centrifugation et lavée à l'eau osmosée jusqu'à neutralité de l'eau de lavage. Elle est ensuite lyophilisée.

Le spectre infrarouge de cette lignine, notée **6** sur la figure 15, montre l'apparition des signaux caractéristiques de la fonction alcyne à 3283 cm⁻¹ et 2120 cm⁻¹. Une analyse RMN ³¹P après dérivatisation par le TMDP montre que les groupements aromatiques de la lignine ont été modifiés de manière quasi-quantitative : 3,7 mmol de groupes -OH aromatiques/g de lignine avant propargylation *versus* 0,5 mmol de groupes -OH aromatiques restants/g de lignine propargylée.

### * Mélange des prépolymères de résorcinol propargylé, de la lignine propargylée et du PETMP :

Une résine, dénommée ci-après résine R8, est préparée en ajoutant le mélange de prépolymères de résorcinol propargylé et la lignine propargylée au PETMP après un broyage fin de la lignine propargylée pour assurer une dispersion homogène de celle-ci, sous simple agitation manuelle et dans un rapport massique prépolymères de résorcinol propargylé/PETMP/lignine propargylée de 75/10/15.

### 4.2 - Durcissement de la résine :

Le durcissement de la résine R8 est réalisé dans des conditions identiques à celles décrites au point 1.2 de l'exemple 1 ci-avant.

### 4.3 - Caractéristiques de la résine :

La résine R8 est soumise à des analyses pour déterminer son taux de coke après durcissement, sa perte de masse au cours du durcissement et sa température de transition vitreuse, que l'on réalise de la même façon que décrit aux points 1.3, 1.6 et 1.7 de l'exemple 1 ci-avant.

Les résultats sont consignés dans le tableau III ci-après.

**Tableau III**

| | |
|---|---|
| Taux de coke | 58% |
| Perte de masse | 4% |
| Température de transition vitreuse | > 330°C |

### EXEMPLE 5 : Préparation d'un dimère d'eugénol propargylé utile comme composé A selon l'invention

### * Préparation du dimère d'eugénol de formule (I) ci-avant :

Le dimère d'eugénol est préparé par métathèse d'eugénol selon un protocole inspiré de celui décrit dans la référence **[4]** précitée.

Pour ce faire, 24 mL d'eugénol (SIGMA-ALDRICH) sont mis en présence de 0,530 g de catalyseur de Grubbs de première génération, sous atmosphère inerte et agitation magnétique, à température ambiante. Une fois le milieu devenu plus épais et figé, le système est placé sous pression réduite (100 kPa) pendant 48 heures. Le solide obtenu est solubilisé dans 1 L d'une solution aqueuse de NaOH à 1 mol/L et filtré sur célite pour retirer le catalyseur. Le filtrat est acidifié par ajout d'HCl concentré jusqu'à précipitation d'un solide gris pâle. Le solide est collecté par filtration sur un entonnoir Büchner et lavé à l'eau permutée jusqu'à neutralité de l'eau de lavage. Le produit est ensuite dispersé dans un volume minimum d'un mélange eau-éthanol (50:50 v/v), solubilisé par élévation de la température (40°C) puis placé à 5°C jusqu'à précipitation. Le solide obtenu est filtré sur un entonnoir Büchner et lavé avec la solution eau-éthanol. Le composé récupéré est solubilisé dans du dichlorométhane et lavé à l'eau. La phase organique est concentrée sous pression réduite pour obtenir 3,0 g de dimère d'eugénol (Rendement : 13 %).

### * Propargylation du dimère d'eugénol :

1,5 g du dimère d'eugénol sont solubilisés dans 24 mL de DMF dans lesquels sont introduits 7,5 g de K₂CO₃ sous agitation magnétique. Puis, 1,2 mL de bromure de propargyle en solution à 80% dans le toluène sont alors introduits. L'agitation magnétique est maintenue pendant 12 heures. Après filtration et dilution dans l'acétate d'éthyle, le milieu est lavé 3 fois à la saumure et 2 fois à l'eau permutée. La phase organique est séchée sur MgSO₄, filtrée et concentrée sous pression réduite.

Sont ainsi obtenus 1,62 g de dimère d'eugénol propargylé, noté **7** sur la figure 15 (Rendement : 86%).

### EXEMPLE 6 : Préparation d'acide gallique propargylé utile comme composé A selon l'invention

5,0 g d'acide gallique (SIGMA-ALDRICH) Sont solubilisés dans 317 mL de DMF dans lesquels sont introduits 101 g de K₂CO₃ sous agitation magnétique. Puis, 32,7 mL de bromure de propargyle en solution à 80 % dans le toluène sont ajoutés à la solution. L'agitation magnétique est maintenue pendant 12 heures. Après filtration et dilution dans l'acétate d'éthyle, le milieu est lavé 3 fois à la saumure et 2 fois à l'eau permutée. La phase organique est séchée sur MgSO₄, filtrée et concentrée sous pression réduite.

Sont ainsi obtenus 7,4 g d'acide gallique propargylé, noté **8** sur la figure 15 (Rendement : 78 %).

### RÉFÉRENCES CITÉES

**[1]** M. C. Joshi et al., Bioorg. Med. Chem. Lett. 2007, 17(11), 3226-3230
**[2]** WO-A-2006/044290
**[3]** WO-A-01/071020
**[4]** H. E. Blackwell et al., J. Am. Chem. Soc. 2000, 122, 58-71
**[5]** S. Chatani et al., Macromol. 2014, 47(15), 4894-4900

## Revendications

1. Résine durcissable, **caractérisée en ce qu'**elle comprend :
(1) au moins un prépolymère qui résulte de la polymérisation d'un composé A comprenant un ou plusieurs cycles aromatiques ou hétéroaromatiques, un premier groupe -O-CH₂-C≡CH et au moins un deuxième groupe choisi parmi les groupes -O-CH₂-C≡CH et -CH₂-CH=CH₂, ces groupes étant portés par le ou les cycles aromatiques ou hétéroaromatiques ; et
(2) un composé B comprenant au moins deux groupes thiols (-SH).

2. Résine durcissable selon la revendication 1, **caractérisée en ce que** le composé A est le produit d'une propargylation d'un composé A' qui comprend un ou plusieurs cycles aromatiques ou hétéroaromatiques, un premier groupe hydroxyle (-OH) ou carboxyle (-COOH) et au moins un deuxième groupe choisi parmi les groupes hydroxyle, carboxyle et -CH₂-CH=CH₂, ces groupes étant portés par le ou les cycles aromatiques ou hétéroaromatiques.

3. Résine durcissable selon la revendication 2, **caractérisée en ce que** composé A' est choisi parmi les monophénols allylés, les polyphénols, les acides phénoliques et les acides polycarboxyliques à un ou plusieurs cycles aromatiques ou hétéroaromatiques.

4. Résine durcissable selon la revendication 2 ou la revendication 3, **caractérisée en ce que** le composé A est issu de la biomasse.

5. Résine durcissable selon la revendication 4, **caractérisée en ce que** le composé A' est choisi parmi le chavicol, l'eugénol, le résorcinol, l'hydroquinone, le pyrocathécol, le phloroglucinol, le pyrogallol, l'hydroxyquinol, le resvératrol, les dimères de monophénols allylés, l'acide parahydroxybenzoïque, l'acide gallique et ses cinq isomères, l'acide vanillique, l'acide salicylique, l'acide 3-hydroxybenzoïque, l'acide 4-hydroxybenzoïque, l'acide protocatéchique et ses cinq isomères.

6. Résine durcissable selon l'une quelconque des revendications 1 à 5, **caractérisée en ce que** le composé B est issu de la biomasse,

7. Résine durcissable selon la revendication 6, **caractérisée en ce que** le composé B est le produit d'une thiolation d'un composé B' qui est obtenu à partir de la biomasse et qui comprend deux ou plus de deux groupes choisis parmi les groupes hydroxyle et carboxyle.

8. Résine durcissable selon la revendication 7, **caractérisée en ce que** le composé B' est choisi parmi le résorcinol, l'hydroquinone, le pyrocathécol, le phloroglucinol, le pyrogallol, l'hydroxyquinol, le resvératrol, les dimères de monophénols allylés, l'acide parahydroxybenzoïque, l'acide gallique et ses cinq isomères, l'acide vanillique, l'acide salicylique, l'acide 3-hydroxybenzoïque, l'acide 4-hydroxybenzoïque, l'acide protocatéchique et ses cinq isomères, les lignines et les tanins.

9. Résine durcissable selon l'une quelconque des revendications 1 à 8, **caractérisée en ce qu'**elle comprend :
- au moins un prépolymère de résorcinol propargylé, d'acide gallique propargylé, d'une lignine propargylée ou d'un dimère d'eugénol propargylé ; et
- un résorcinol thiolé, un acide gallique thiolé, une lignine thiolée ou un dimère d'eugénol thiolé comme composé B.

10. Résine durcissable selon l'une quelconque des revendications 1 à 9, **caractérisée en ce qu'**elle comprend de 80 à 95 parties en masse de prépolymère(s) pour 5 à 20 parties en masse de composé B.

11. Résine durcissable selon l'une quelconque des revendications 1 à 10, **caractérisée en ce qu'**elle comprend plus un composé C qui est le produit d'une propargylation d'une macromolécule polyphénolique issue de la biomasse, de préférence une lignine ou un tanin.

12. Résine durcissable selon la revendication 11, **caractérisée en ce qu'**elle comprend de 30 à 94 parties en masse de prépolymère(s), de 5 à 20 parties en masse de composé B et de 1 à 50 parties en masse de composé C.

13. Matériau, **caractérisé en ce qu'**il est obtenu par durcissement d'une résine durcissable selon l'une quelconque des revendications 1 à 12.

14. Matériau selon la revendication 13, **caractérisé en ce qu'**il est un matériau formant la matrice d'un matériau composite du type comprenant une matrice dans laquelle se trouve un renfort et, de préférence, d'un matériau composite ablatif.

15. Utilisation d'une résine durcissable selon l'une quelconque des revendications 1 à 12, pour la fabrication d'un matériau composite ablatif, de préférence de protection thermique.

## Patentansprüche

1. Härtbares Harz, **dadurch gekennzeichnet, dass** es enthält:
(1) mindestens ein Präpolymer, das aus der Polymerisation einer Verbindung A resultiert, die einen oder mehrere aromatische oder heteroaromatische Ringe, eine erste Gruppe -O-CH₂-C≡CH und mindestens eine zweite Gruppe, ausgewählt aus den Gruppen -O-CH₂-C≡CH und -CH₂-CH≡CH₂, enthält, wobei diese Gruppen von dem bzw. den aromatischen oder heteroaromatischen Ringen getragen werden; und
(2) eine Verbindung B, die mindestens zwei Thiol (-SH)-Gruppen enthält.

2. Härtbares Harz nach Anspruch 1,
**dadurch gekennzeichnet, dass** die Verbindung A das Produkt einer Propargylation einer Verbindung A' ist, die einen oder mehrere aromatische oder heteroaromatische Ringe, eine erste Hydroxyl- (-OH) oder Carboxyl-(-COOH) Gruppe und mindestens eine zweite Gruppe, ausgewählt aus Hydroxyl-, Carboxyl- und -CH₂-CH=CH-Gruppen, enthält, wobei diese Gruppen von dem bzw. den aromatischen oder heteroaromatischen Ringen getragen werden.

3. Härtbares Harz nach Anspruch 2,
**dadurch gekennzeichnet, dass** die Verbindung A' ausgewählt ist aus allylierten Monophenolen, Polyphenolen, Phenolsäuren und Polycarbonsäuren mit einem oder mehreren aromatischen oder heteroaromatischen Ringen.

4. Härtbares Harz nach Anspruch 2 oder Anspruch 3,
**dadurch gekennzeichnet, dass** die Verbindung A aus Biomasse stammt.

5. Härtbares Harz nach Anspruch 4,
**dadurch gekennzeichnet, dass** die Verbindung A' ausgewählt ist aus Chavicol, Eugenol, Resorcin, Hydrochinon, Brenzcatechin, Phloroglucinol, Pyrogallol, Hydroxychinol, Resveratrol, Dimeren von allylierten Monophenolen, Parahydroxybenzoesäure, Gallussäure und ihren fünf Isomeren, Vanillinsäure, Salicylsäure, 3-Hydroxybenzoesäure, 4-Hydroxybenzoesäure, Protokatechinsäure und ihren fünf Isomeren.

6. Härtbares Harz nach einem der Ansprüche 1 bis 5,
**dadurch gekennzeichnet, dass** die Verbindung B aus Biomasse stammt.

7. Härtbares Harz nach Anspruch 6,
**dadurch gekennzeichnet, dass** die Verbindung B das Produkt einer Thiolation einer Verbindung B' ist, die aus Biomasse gewonnen wird und die zwei oder mehr Gruppen, ausgewählt aus Hydroxyl- und Carboxylgruppen, enthält.

8. Härtbares Harz nach Anspruch 7,
**dadurch gekennzeichnet, dass** die Verbindung B' ausgewählt ist aus Resorcin, Hydrochinon, Brenzcatechin, Phloroglucin, Pyrogallol, Hydroxychinol, Resveratrol, Dimeren von allylierten Monophenolen, Parahydroxybenzoesäure, Gallussäure und ihren fünf Isomeren, Vanillinsäure, Salicylsäure, 3-Hydroxybenzoesäure, 4-Hydroxybenzoesäure, Protokatechinsäure und ihren fünf Isomeren, Ligninen und Tanninen.

9. Härtbares Harz nach einem der Ansprüche 1 bis 8,
**dadurch gekennzeichnet, dass** es enthält:
- mindestens ein Präpolymer aus propargyliertem Resorcin, propargylierter Gallussäure, propargyliertem Lignin oder einem Dimer aus propargyliertem Eugenol; und
- ein thioliertes Resorcin, eine thiolierte Gallussäure, ein thioliertes Lignin oder ein Dimer aus thioliertem Eugenol als Verbindung B.

10. Härtbares Harz nach einem der Ansprüche 1 bis 9,
**dadurch gekennzeichnet, dass** es 80 bis 95 Masse-Teile Präpolymer(e) zu 5 bis 20 Masse-Teilen der Verbindung B enthält.

11. Härtbares Harz nach einem der Ansprüche 1 bis 10,
**dadurch gekennzeichnet, dass** es zusätzlich eine Verbindung C enthält, die das Produkt der Propargylation eines aus Biomasse stammenden polyphenolischen Makromoleküls, vorzugsweise ein Lignin oder Tannin, ist.

12. Härtbares Harz nach Anspruch 11,
**dadurch gekennzeichnet, dass** es 30 bis 94 Masse-Teile Präpolymer(e), 5 bis 20 Masse-Teile der Verbindung B und 1 bis 50 Masse-Teile der Verbindung C enthält.

13. Material, **dadurch gekennzeichnet, dass** es durch Härten eines härtbaren Harzes nach einem der Ansprüche 1 bis 12 erhalten wird.

14. Material nach Anspruch 13,
**dadurch gekennzeichnet, dass** es ein Material ist, das die Matrix eines Verbundmaterials vom Typ mit Matrix bildet, in der sich eine Verstärkung, vorzugsweise ein ablatives Verbundmaterial, befindet.

15. Verwendung eines härtbaren Harzes nach einem der Ansprüche 1 bis 12 zur Herstellung eines ablativen Verbundmaterials, vorzugsweise zum thermischen Schutz.

## Claims

1. Curable resin, **characterized in that** it comprises:
(1) at least one prepolymer resulting from the polymerization of a compound A comprising one or more aromatic or heteroaromatic cycles, a first -O-CH₂-C≡CH group and at least one second group selected from the -O-CH₂-C≡CH and -CH₂-CH=CH₂ groups, these groups being borne by the aromatic cycle or heteroaromatic cycle(s); and
(2) a compound B comprising at least two thiol groups (-SH).

2. Curable resin according to claim 1, **characterized in that** the compound A is the product of a propargylation of a compound A' which comprises one or more aromatic or heteroaromatic cycles, a first hydroxyl (-OH) or carboxyl (-COOH) group and at least one second group selected from hydroxyl, carboxyl and -CH₂-CH=CH₂ groups, these groups being borne by the aromatic or heteroaromatic cycle(s).

3. Curable resin according to claim 2, **characterized in that** compound A' is chosen from allylated monophenols, polyphenols, phenolic acids and polycarboxylic acids with one or more aromatic or heteroaromatic cycles.

4. Curable resin according to claim 2 or claim 3, **characterized in that** the compound A is derived from the biomass.

5. Curable resin according to claim 4, **characterized in that** the compound A' is selected from chavicol, eugenol, resorcinol, hydroquinone, pyrocathecol, phloroglucinol, pyrogallol, hydroxyquinol, resveratrol, allylated monophenol dimers, parahydroxybenzoic acid, gallic acid and its five isomers, vanillic acid, salicylic acid, 3-hydroxybenzoic acid, acid 4-hydroxybenzoic acid, protocatechic acid and its five isomers.

6. Curable resin according to any one of claims 1 to 5, **characterized in that** the compound B is derived from the biomass.

7. Curable resin according to claim 6, **characterized in that** the compound B is the product of a thiolation of a compound B' which is obtained from the biomass and which comprises two or more groups selected from hydroxyl and carboxyl groups.

8. Curable resin according to claim 7, **characterized in that** the compound B' is selected from resorcinol, hydroquinone, pyrocathecol, phloroglucinol, pyrogallol, hydroxyquinol, resveratrol, allylated monophenol dimers, parahydroxybenzoic acid, gallic acid and its five isomers, vanillic acid, salicylic acid, 3-hydroxybenzoic acid, 4-hydroxybenzoic acid, protocatechic acid and its five isomers, lignins and tannins.

9. Curable resin according to any one of claims 1 to 8, **characterized in that** it comprises:
- at least one prepolymer of propargylated resorcinol, propargylated gallic acid, propargylated lignin or of a propargylated eugenol dimer; and
- a thiolated resorcinol, a thiolated gallic acid, a thiolated lignin or a eugenol dimer thiolated as compound B.

10. Curable resin according to any one of claims 1 to 9, **characterized in that** it comprises from 80 to 95 parts by mass of prepolymer(s) for 5 to 20 parts by mass of compound B.

11. Curable resin according to any one of claims 1 to 10, **characterized in that** it comprises in addition a compound C which is the product of a propargylation of a polyphenol macromolecule derived from the biomass, preferably a lignin or a tannin.

12. Curable resin according to claim 11, **characterized in that** it comprises from 30 to 94 parts by mass of prepolymer(s), from 5 to 20 parts by mass of compound B, and from 1 to 50 parts by mass of compound C.

13. Material, **characterized in that** it is obtained by curing a curable resin according to any one of claims 1 to 12.

14. Material according to claim 13, **characterized in that** it is a material forming the matrix of a composite material of the type comprising a matrix in which there is a reinforcement and, preferably, of an ablative composite material.

15. Use of a curable resin according to any one of claims 1 to 12, for the manufacture of an ablative composite material, preferably for thermal protection.
